# FASCICULE DE BREVET EUROPEEN

(11) **EP 0 957 287 B1**
(45) Date de publication et mention de la délivrance du brevet: **25.06.2003**
(21) Numéro de dépôt: 99401007.2
(22) Date de dépôt: 23.04.1999
(51) Int. Cl.: F16F 13/26

(54) **Dispositif de commande d'un support hydroélastique**
Regelungsvorrichtung für ein hydroelastisches Lager
Control device for a hydraulically-damped elastic support

(30) Priorité: 13.05.1998 FR 9806036
(43) Date de publication de la demande: 17.11.1999
(73) Titulaire: AUTOMOBILES PEUGEOT, 75116 Paris (FR); AUTOMOBILES CITROEN, 92200 Neuilly-sur-Seine (FR)
(72) Inventeur: Le Fol, Marcel, 35410 Domloup (FR)
(74) Mandataire: Lanceplaine, Jean-Claude

(56) Documents cités:
- FR-A- 2 670 261
- FR-A- 2 690 962

## Description

La présente invention a pour objet un dispositif de commande d'un support hydroélastique destiné à être interposé entre deux ensembles à suspendre l'un par rapport à l'autre, notamment pour la suspension d'un moteur ou groupe motopropulseur de véhicule automobile et le reste de la structure ou châssis de celui-ci pour suspendre ce moteur dans le véhicule.

Des supports hydroélastiques de ce type ont déjà été décrits dans les documents FR-A-2 670 261 et FR-A-2 690 962.

Un tel support hydroélastique comprend généralement un corps formé par une masse en matériau élastomère reliant une armature supérieure et une armature inférieure fixées respectivement sur les deux éléments.

De plus, ce support comporte une chambre de travail délimitée au moins en partie par la masse en matériau élastomère et une chambre d'expansion, ces deux chambres étant remplies de liquide et reliées entre elles par un passage de communication.

La chambre de travail est également délimitée en partie par une cloison mobile en matériau élastique dont la face extérieure comporte un poussoir avec lequel coopère un système d'entraînement de cette cloison mobile pour appliquer à cette dernière des déplacements commandés de manière à créer dans la chambre de travail des forces de pression synchrones avec les harmoniques des vibrations de fonctionnement du groupe motopropulseur.

Plus particulièrement, ces forces de pression sont synchrones avec les harmoniques d'ordre 2 des vibrations d'excitation provenant de ce moteur.

En fait, le but du système d'entraînement de la cloison mobile est de créer à l'intérieur d'un tel support assurant la liaison du groupe motopropulseur au reste de la structure de véhicule, des efforts qui s'opposent aux efforts engendrés par les déplacements relatifs de ce groupe motopropulseur par rapport au reste de la structure du véhicule indépendamment de leur origine.

Ce support engendre alors des forces en synchronisme avec celles développées par le groupe motopropulseur et sont fonctionnement nécessite un apport d'énergie extérieur.

Dans ce type de support hydroélastique utilisé jusqu'à présent, le système d'entraînement de la cloison mobile est constitué par un système du type à bielle et manivelle qui est relié au groupe motopropulseur du véhicule ou à un moteur électrique.

Mais, les supports hydroélastiques équipés d'un tel système d'entraînement ont pour inconvénient d'être complexe du fait du nombre important de pièces et par conséquent d'un prix de revient élevé.

De plus, ils demandent une puissance importante étant donné les masses en mouvement.

L'invention a pour but d'éviter ces inconvénients en proposant un dispositif de commande d'un support hydroélastique qui permet de diminuer le coût de l'ensemble ainsi que celui du montage, grâce à sa simplification et à la réduction du nombre de composants et de pouvoir réaliser un support compact qui demande une puissance réduite.

L'invention a donc pour objet un dispositif de commande d'un support hydroélastique destiné à être interposé entre deux éléments à suspendre l'un par rapport à l'autre, notamment pour la suspension d'un groupe motopropulseur dans une caisse d'un véhicule automobile, comprenant un corps formé par une masse en matériau élastomère reliant une armature supérieure et une armature inférieure fixées respectivement sur les deux éléments, une chambre de travail délimitée au moins en partie par la masse en matériau élastomère et une chambre d'expansion, ces deux chambres étant remplies de liquide et reliées entre elles par un passage de communication, et dans lequel la chambre de travail est également délimitée en partie par une cloison mobile en matériau élastique dont la face extérieure à la chambre de travail comporte un poussoir avec lequel coopère un système d'entraînement de la cloison mobile pour appliquer à cette dernière des déplacements commandés de manière à créer dans la chambre de travail des forces de pression synchrones avec les armoniques des vibrations du groupe motopropulseur, caractérisé en ce que le système d'entraînement de la cloison mobile comporte un moteur électrique à courant continu dont l'arbre de sortie, vertical est décalé et parallèle à l'axe du corps et est relié au poussoir de cette cloison mobile par des moyens d'actionnement imprimant à ladite cloison un mouvement de basculement alternatif.

Selon d'autres caractéristiques de l'invention:
- les moyens d'actionnement comprennent, d'une part, une bague cylindrique entraînée en rotation par l'arbre de sortie du moteur électrique et, d'autre part, une tige dont une première extrémité est reliée au poussoir en un point excentré par rapport au centre de ce poussoir et dont l'autre extrémité est montée libre en rotation dans un lamage ménagé dans la bague, l'axe dudit lamage étant incliné par rapport à l'axe de ladite bague,
- la bague est montée libre en rotation au moyen d'un roulement dans une embase fixée à l'armature inférieure du corps,
- l'extrémité libre de la tige est montée libre en rotation dans le lamage de la bague au moyen d'un roulement,
- la bague est en acier ou en aluminium ou en alliage d'aluminium.

L'invention sera mieux comprise à l'aide de la description qui va suivre, donnée uniquement à titre d'exemple et faite en se référant aux dessins annexés, sur lesquels:
- la Fig. 1 est une vue en coupe axiale d'un support hydroélastique équipé d'un dispositif de commande conforme à l'invention,
- les Figs. 2 à 4 sont des vues à plus grande échelle et en coupe axiale montrant différentes positions du dispositif de commande conforme à l'invention.

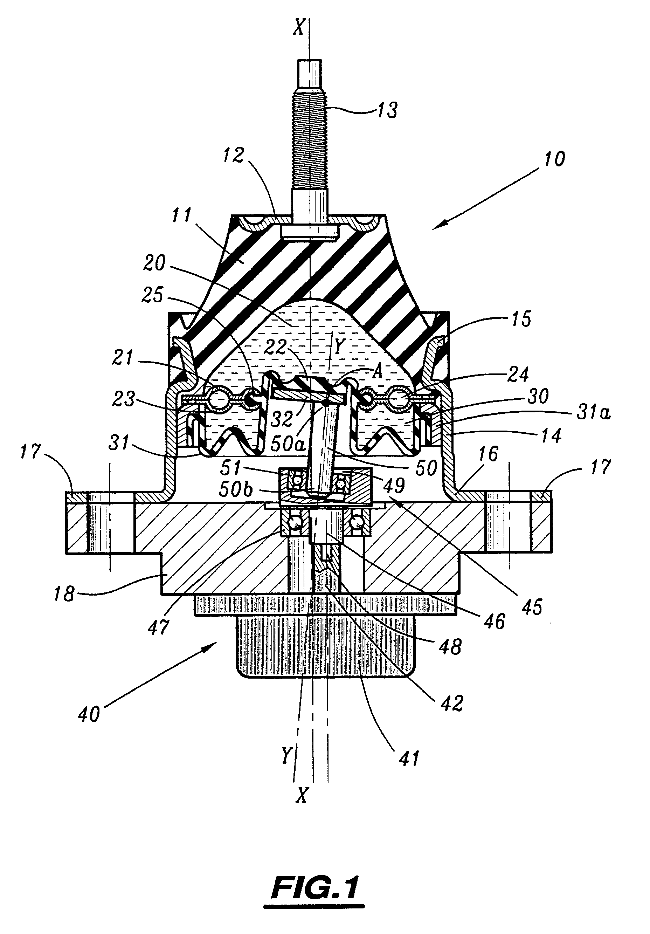

Le support hydroélastique représenté à la Fig. 1 est adapté pour être interposé entre deux ensembles à suspendre l'un par rapport à l'autre et plus particulièrement pour être interposé entre un groupe motopropulseur et le reste de la structure ou châssis de ce véhicule.

Le support hydroélastique comprend un corps 10 formé par une masse en matériau élastomère 11 qui relie, d'une part, une armature supérieure 12 de préférence en acier et en forme de disque comportant un perçage axial pour le passage d'un organe 13 de liaison avec l'élément à supporter, comme par exemple le groupe motopropulseur d'un véhicule automobile et, d'autre part, une armature inférieure 14 de préférence en acier.

L'armature inférieure 14 comporte un rebord supérieur 15 noyé dans la masse 11 en matériau élastomère et un rebord inférieur 16 muni de pattes 17 de fixation sur la caisse du véhicule automobile.

Dans l'exemple de réalisation représenté à la Fig. 1, les pattes de fixation 17 sont fixées sur une platine 18 qui est elle même fixée sur la caisse du véhicule, comme par exemple un longeron.

Le corps 10 est réalisé par surmoulage et adhérisation de l'élastomère sur les armatures 12 et 14.

La masse 11 en matériau élastomère délimite à sa partie inférieure et en partie une chambre de travail 20.

Cette chambre de travail 20 est également délimitée par une plaque rigide 21 de forme générale annulaire et par une cloison mobile 22 déformable élastiquement qui est susceptible de se déplacer sensiblement selon l'axe du corps 10.

La plaque 21 coopère avec une plaque symétrique 23 pour délimiter entre elles un canal de passage 24 qui met en communication la chambre de travail 20 avec une chambre d'expansion 30.

Le bord périphérique de la cloison mobile 22 en forme de disque comporte un bourrelet 25 qui est monté serré de manière étanche entre les bords circulaires intérieurs en vis-à-vis des deux plaques annulaires, respectivement 21 et 23.

La chambre d'expansion 30 est délimitée, d'une part, par la face inférieure de la plaque annulaire 23 et, d'autre part, par une portion de membrane déformable élastiquement 31 venue de matière avec la cloison mobile 22.

Le bord périphérique externe de la membrane 31 est reliée à une armature extérieure 31a.

La face inférieure de la cloison mobile 22 comporte un poussoir 32 en forme de disque qui coopère avec un système d'entraînement 40 de ladite cloison mobile 22 pour appliquer à cette dernière des déplacements commandés de manière à créer dans la chambre de travail 20 des forces de pression synchrones avec les harmoniques des vibrations du groupe motopropulseur.

Le système d'entraînement 40 de la cloison mobile 22 comporte un moteur électrique 41 à courant continu dont l'arbre de sortie vertical 42 est décalé et parallèle à l'axe XX du corps 10 et est relié au poussoir 32 de cette cloison mobile 22 par des moyens d'actionnement 45 imprimant à ladite cloison 22 un mouvement de basculement alternatif.

Les moyens d'actionnement 45 comprennent une bague cylindrique 46 qui est montée libre en rotation dans la platine 18 au moyen d'un roulement 47.

La bague 46 comporte un axe 48 qui est relié à l'arbre de sortie 42 du moteur 41 par l'intermédiaire de moyens d'accouplement appropriés non représentés.

Par ailleurs, la bague 46 comporte, à sa partie supérieure un lamage 49 dont l'axe est incliné par rapport à l'axe de la bague 46, c'est à dire par rapport à l'arbre 42 du moteur 41, ainsi que représenté à la Fig. 1.

Les moyens d'actionnement 45 comprennent également une tige 50 dont une première extrémité 50a est reliée au poussoir 32 en un point A excentré par rapport au centre de ce poussoir 32 et dont l'autre extrémité 50b est montée libre en rotation au moyen d'un roulement 51 dans le lamage 49 ménagé dans la bague 46.

Cette bague 46 est en acier ou en aluminium ou en alliage d'aluminium.

La chambre de travail 20 et la chambre d'expansion 30 sont remplies de liquide, comme par exemple de l'antigel.

Le montage des différents composants du support hydroélastique est réalisé de la façon suivante.

Tout d'abord, le bourrelet 25 de la membrane 31 est placé entre les plaques 21 et 23 et l'ensemble constitué par les plaques 21 et 23, la membrane 31, l'armature extérieure 31a, le poussoir 32 et la tige 50 est emmanché dans l'armature inférieure 14 du corps 10.

La chambre de travail 20 et la chambre d'expansion 30 sont remplies de liquide, soit par immersion, soit sous vide.

Ensuite, le roulement 51 est mis en place à l'intérieur du lamage 49 de la bague 46 et cette bague 46 est emmanchée à l'intérieur du roulement 47.

Enfin, l'arbre de sortie 42 du moteur électrique 41 est accouplé à l'axe 48 de la bague 46 en faisant coïncider ledit arbre 42 avec ledit axe 48 et ce moteur électrique 41 est fixé à la platine 18 par des organes appropriés, non représentés.

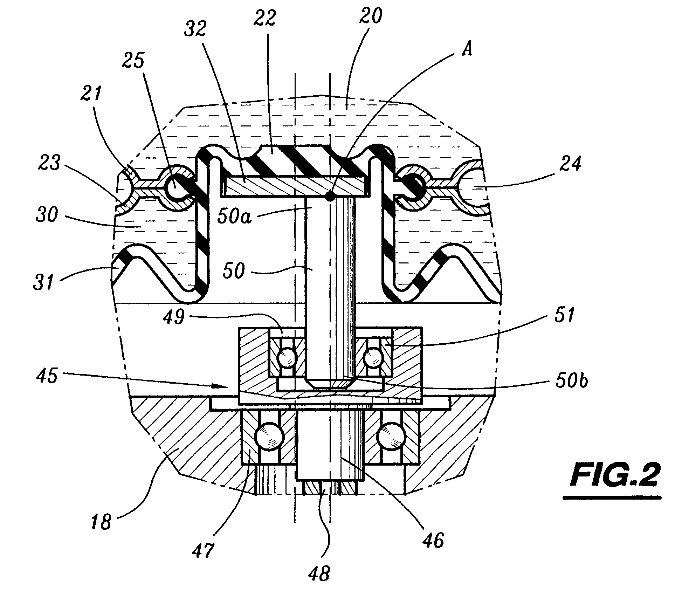

En se reportant maintenant aux Figs. 2 à 4, on va décrire le fonctionnement du dispositif de commande du support hydroélastique.

Le but du dispositif de commande 45 est de modifier le volume de liquide à l'intérieur de la chambre de travail 20 en fonction de la rotation du groupe motopropulseur et en particulier de son harmonique 2 qui correspond à deux explosions par tour dans le cadre d'un quatre cylindres.

Le moteur électrique 41 entraîne en rotation l'arbre de sortie 42 et la bague 46.

Du fait du désalignement de l'axe XX du corps 10 par rapport à l'axe de l'arbre 42 du moteur électrique 41 et de l'inclinaison et de l'excentration de la tige 50 avec le roulement 51 dans le lamage 49 de la bague 46, le poussoir 32 et la cloison mobile 22 décrivent un mouvement de basculement alternatif ce qui permet d'obtenir la variation de volume du liquide dans la chambre de travail 20 correspondant à la variation de volume engendré par le bourdonnement dû aux explosions dans les cylindres du groupe motopropulseur.

Ainsi, le mouvement de basculement alternatif de la cloison souple 22 engendré par le basculement du poussoir 32 provoque le phénomène de pompage désiré.

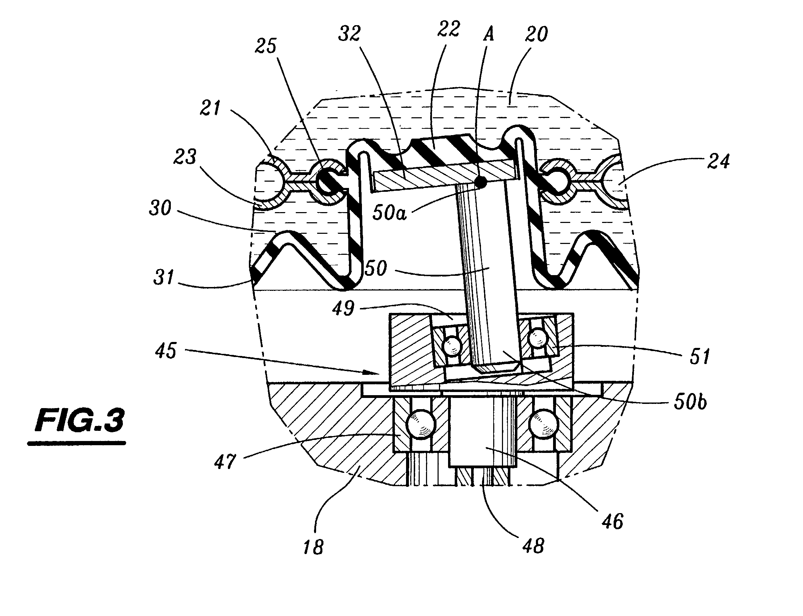

La position du poussoir 32 et de la cloison mobile 22 représentée à la Fig. 2 correspond à la position d'équilibre du système tandis que la position du poussoir 32 et de la cloison mobile 22 représentée à la Fig. 3 correspond au volume maximum de la chambre de travail 20.

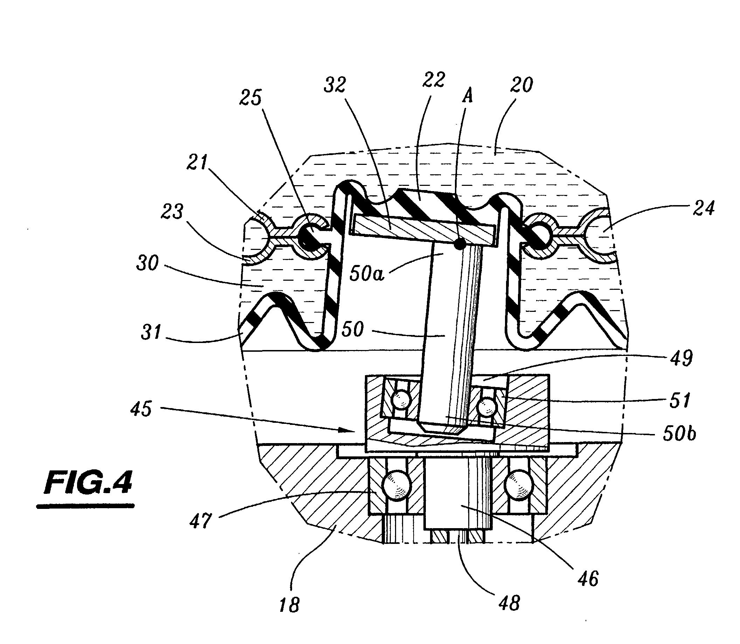

Par contre, la position du poussoir 32 et de la cloison mobile 22 représentée à la Fig. 4 correspond au volume minimum de cette chambre de travail 20.

Le dispositif de commande selon l'invention permet de réduire les masses en mouvement et de nécessiter moins d'effort qu'un système bielle/manivelle classique.

Ainsi, le support hydroélastique équipé d'un tel dispositif de commande est compact et comporte un nombre de composants réduit permettant de ce fait de diminuer le coût de l'ensemble ainsi que celui du montage.

## Revendications

1. Dispositif de commande d'un support hydroélastique destiné à être interposé entre deux éléments à suspendre l'un par rapport à l'autre, notamment pour la suspension d'un groupe motopropulseur dans une caisse d'un véhicule automobile, comprenant un corps (10) formé par une masse (11) en matériau élastomère reliant une armature supérieure (12) et une armature inférieure (14) fixées respectivement sur les deux éléments, une chambre de travail 20 délimitée au moins en partie par la masse (11) en matériau élastomère et une chambre d'expansion (30), ces deux chambres étant remplies de liquide et reliées entre elles par un passage de communication (24), et dans lequel la chambre de travail (20) est également délimitée en partie par une cloison mobile (22) en matériau élastique dont la face extérieure à la chambre de travail (20) comporte un poussoir (32) avec lequel coopère un système d'entraînement (40) de la cloison mobile (22) pour appliquer à cette dernière des déplacements commandés de manière à créer dans la chambre de travail (20) des forces de pression synchrones avec les harmoniques des vibrations du groupe motopropulseur, **caractérisé en ce que** le système d'entraînement (40) de la cloison mobile (22) comporte un moteur électrique (41) à courant continu dont l'arbre de sortie vertical (42) est décalé et parallèle à l'axe du corps (10) et est relié au poussoir (32) de cette cloison mobile (22) par des moyens (45) d'actionnement imprimant à ladite cloison (22) un mouvement de basculement alternatif.

2. Dispositif selon la revendication 1, **caractérisé en ce que** les moyens (45) d'actionnement comprennent, d'une part, une bague cylindrique (46) entraînée en rotation par l'arbre de sortie (42) du moteur (41) et, d'autre part, une tige (50) dont une première extrémité (50a) est reliée au poussoir (32) en un point excentré par rapport au centre de ce poussoir (32) et dont l'autre extrémité (32b) est montée libre en rotation dans un lamage (49) ménagé dans la bague (46), l'axe dudit lamage (49) étant incliné par rapport à l'axe de ladite bague (46).

3. Dispositif selon la revendication 1 ou 2, **caractérisé en ce que** la bague (46) est montée libre en rotation au moyen d'un roulement (47) dans une embase (18) fixée à l'armature inférieure (14) du corps (10).

4. Dispositif selon la revendication 2, **caractérisé en ce que** l'extrémité (50b) de la tige (50) est montée libre en rotation dans le lamage (49) de la bague (46) au moyen d'un roulement (51).

5. Dispositif selon l'une quelconque des revendications précédentes, **caractérisé en ce que** la bague (26)est en acier ou en aluminium ou en alliage d'aluminium.

## Patentansprüche

1. Einrichtung zur Steuerung eines hydroelastischen Lagers, das dazu bestimmt ist, zwischen zwei relativ zueinander zu lagernden Elementen angeordnet zu werden, insbesondere zur Aufhängung einer Triebwerksgruppe an einer Karosserie eines Kraftfahrzeugs, mit einem aus einer Masse (11) von Elastomerwerkstoff gebildeten Körper (10), der eine an einem der beiden Elemente befestigte obere Bewehrung (12) und eine am anderen der beiden Elemente befestigte untere Bewehrung (14) miteinander verbindet, einer Arbeitskammer (20), die wenigstens zum Teil durch die Masse (11) aus Elastomerwerkstoff begrenzt ist, und einer Ausdehnungskammer (30), wobei die beiden Kammern mit Flüssigkeit gefüllt und durch einen Verbindungskanal (24) miteinander verbunden sind und die Arbeitskammer (20) ferner teilweise durch eine bewegliche Wand (22) aus elastischem Werkstoff begrenzt ist, deren bezüglich der Arbeitskammer (20) äußere Seite einen Stößel (32) aufweist, mit dem ein zum Antrieb der beweglichen Wand (22) dienendes System (40) zusammenwirkt, um auf die Wand (22) Verschiebungen auszuüben, die in der Weise gesteuert werden, dass in der Arbeitskammer (20) Druckkräfte erzeugt werden, die synchron zu den Harmonischen der Schwingungen der Triebwerksgruppe sind, **dadurch gekennzeichnet, dass** das zum Antrieb der beweglichen Wand (22) dienende System (40) einen Gleichstrom-Elektromotor (41) aufweist, dessen vertikale Ausgangswelle (42) bezüglich der Achse des Körpers (10) parallelverschoben ist und mit dem Stößel (32) der beweglichen Wand (22) durch Betätigungsorgane (45) verbunden ist, die der Wand (22) eine alternierende Kippbewegung aufprägen.

2. Einrichtung nach Anspruch 1, **dadurch gekennzeichnet, dass** die Betätigungsorgane (45) zum einen einen zylindrischen Ring (46), der durch die Ausgangswelle (42) des Motors (41) in Drehbewegung versetzt wird, und zum anderen eine Stange (50) umfassen, deren eines Ende (50a) mit einem bezüglich des Mittelpunkts des Stößels (32) exzentrischen Punkt des Stößels (32) verbunden ist und deren anderes Ende (50b) drehbar in einer im Ring (46) ausgebildeten Versenkung (49) montiert ist, deren Achse bezüglich der Achse des Rings (46) geneigt ist.

3. Einrichtung nach Anspruch 1 oder 2, **dadurch gekennzeichnet, dass** der Ring (46) mit Hilfe eines Wälzlagers (47) in einem an der unteren Bewehrung (14) des Körpers (10) befestigten Sockel (18) drehbar montiert ist.

4. Einrichtung nach Anspruch 2, **dadurch gekennzeichnet, dass** das Ende (50b) der Stange (50) mit Hilfe eines Wälzlagers (51) drehbar in der Versenkung (49) des Rings (46) montiert ist.

5. Einrichtung nach einem der vorhergehenden Ansprüche, **dadurch gekennzeichnet, dass** der Ring (46) aus Stahl oder Aluminium oder einer Aluminiumlegierung besteht.

## Claims

1. Device for controlling a hydraulically-damped elastic support adapted to be interposed between two elements one of which is to be suspended relative to the other, notably for the suspension of a power unit in a housing of a motor vehicle, comprising a body (10) formed by a mass (11) of elastomeric material connecting an upper reinforcement (12) and a lower reinforcement (14), respectively, fixed to the two elements, a working chamber 20 at least partly delimited by the mass (11) of elastomeric material and an expansion chamber (30), these two chambers being filled with liquid and connected to each other by a communication passage (24), and wherein the working chamber (20) is also partly delimited by a movable partition (22) of elastic material, the face of which on the outside of the working chamber (20) comprises a push-rod (32) with which a drive system (40) of the movable partition (22) cooperates in order to subject the latter to controlled movements so as to create pressure forces in the working chamber (20) which are synchronised with the harmonics of the vibrations of the power unit, **characterised in that** the system (40) for driving the movable partition (22) comprises a dc electric motor (41) the vertical output shaft (42) of which is offset and parallel to the axis of the body (10) and is connected to the push-rod (32) of this movable partition (22) by actuating means (45) which subject said partition (22) to a reciprocating rocking movement.

2. Device according to claim 1, **characterised in that** the actuating means (45) comprise on the one hand a cylindrical ring (46) rotationally driven by the output shaft (42) of the motor (41) and on the other hand a rod (50) a first end (50a) of which is connected to the push-rod (32) at a point which is eccentric relative to the centre of this push-rod (32) and the other end (32b) of which is mounted to be freely rotatable in a bore (49) provided in the ring (46), the axis of said bore (49) being inclined relative to the axis of said ring (46).

3. Device according to claim 1 or 2, **characterised in that** the ring (46) is mounted to be freely rotatable by means of a roller bearing (47) in abase (18) fixed to the lower reinforcement (14) of the body (10).

4. Device according to claim 2, **characterised in that** the end (50b) of the rod (50) is mounted to be freely rotatable in the bore (49) of the ring (46) by means of a roller bearing (51).

5. Device according to one of the preceding claims, **characterised in that** the ring (26) is made of steel or aluminium or aluminium alloy.
